# NEUE EUROPÄISCHE PATENTSCHRIFT

(11) **EP 3 044 056 B2**
(45) Veröffentlichungstag und Bekanntmachung des Hinweises auf die Entscheidung über den Einspruch: **24.01.2024**
(45) Hinweis auf die Patenterteilung: 04.12.2019
(21) Anmeldenummer: 14766676.2
(22) Anmeldetag: 09.09.2014
(51) Int. Cl.: B60T 17/22, B60T 7/22

(54) **FAHRASSISTENZSYSTEM MIT GESTEIGERTER AUSFALLSICHERHEIT UND VERFÜGBARKEIT**
DRIVER ASSISTANCE SYSTEM WITH INCREASED RELIABILITY AND AVAILABILITY
SYSTÈME D'AIDE À LA CONDUITE À SÉCURITÉ INTÉGRÉE ET DISPONIBILITÉ ACCRUES

(30) Priorität: 13.09.2013 DE 102013218401
(43) Veröffentlichungstag der Anmeldung: 20.07.2016
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); PUTZER, Tobias, 74177 Bad Friedrichshall (DE)
(86) Internationale Anmeldenummer: PCT/EP2014/069165
(87) Internationale Veröffentlichungsnummer: WO 2015/036393

(56) Entgegenhaltungen:
- EP-A1- 1 985 884
- EP-A1- 1 985 884
- EP-A1- 2 055 541
- EP-A2- 1 081 004
- EP-B1- 1 485 282
- WO-A1-02/083470
- WO-A1-2005/092659
- WO-A1-2006/010735
- WO-A1-2009/053430
- WO-A1-2010/017998
- WO-A1-2014/094936
- WO-A2-03/029060
- DE-A1- 10 160 278
- DE-A1- 19 738 877
- DE-A1-102004 046 869
- DE-A1-102004 055 960
- DE-A1-102006 029 943
- DE-A1-102006 044 422
- DE-A1-102007 048 535
- DE-A1-102008 003 379
- DE-A1-102008 008 555
- DE-A1-102008 018 622
- DE-A1-102008 029 895
- DE-A1-102009 037 382
- FR-A1- 2 875 875
- FR-A1- 2 875 875
- US-A1- 2005 264 099
- US-A1- 2005 264 099
- US-A1- 2010 217 488
- US-A1- 2010 217 488
- US-B2- 8 397 879
- US-B2- 8 397 879
- ECE-R13, gesetzliche Fahrzeug-Vorschriften"
- Fahrzeug Vorschriften? WABCO Ausgabe 2004
- International Standard ISO 15622, 2002

## Beschreibung

### Stand der Technik

Zunehmend werden in Kraftfahrzeugen Funktionen zu (teil-)autonomen Fahrmanövern angeboten. Hierzu zählen aktuell insbesondere die Funktionen "autonomes Einparken" sowie "adaptive Geschwindigkeitsregelung". Bei der Funktion "autonomes Einparken" wird beispielsweise der Fahrer eines Fahrzeugs beim Rangieren, insbesondere während eines Parkvorgangs unterstützt. Dabei wird die Umgebung des Fahrzeugs mittels Sensoren abgetastet und das Fahrzeug automatisch abgebremst, wenn es sich einem anderen Objekt, wie z.B. einem parkenden Fahrzeug, zu stark nähert. Ähnlich arbeitet auch die Funktion "adaptive Geschwindigkeitsregelung", welche ein automatisches Anfahren und Abbremsen aufgrund von verzögerten oder stehenden vorausfahrenden Fahrzeugen ermöglicht.

Bekannte Fahrassistenzsysteme umfassen üblicherweise ein Steuergerät mit einem Algorithmus, Ultraschall-Sensoren zum Abtasten der Umgebung des Fahrzeugs und einen Aktuator der Bremsanlage, wie z.B. ein Hydroaggregat. Sobald das Fahrzeug einen Mindestabstand unterschritten hat, wird der Aktuator vom Steuergerät angesteuert und das Fahrzeug automatisch abgebremst. Wenn nun bei einem Vorgang die hydraulische Bremsanlage ausfällt - beispielsweise wegen eines Fehlers am Bremsaktuator oder Bremsen-Steuergerät - wird das Fahrzeug nicht mehr automatisch abgebremst, so dass es zu einer Kollision mit einem anderen Objekt kommen kann.

Aus dem Stand der Technik ist beispielsweise die DE102006048910 bekannt. Dieses Dokument beschreibt ein Verfahren zum Absichern eines Parkassistenzsystems gegenüber einem Ausfall der Betriebsbremsanlage. Um eine Kollision des Fahrzeugs mit einem umliegenden Objekt zu vermeiden, wird vorgeschlagen, die Funktion der Betriebsbremsanlage zu überwachen und bei Vorliegen eines Fehlers wenigstens ein anderes Fahrzeug-System, wie z. B. ein Automatikgetriebe oder eine automatische Parkbremse, zu betätigen, um das Fahrzeug zu bremsen und/oder die Übertragung des Antriebsmoments auf die Räder zu unterbrechen

Weiterhin offenbart die DE102010001492 ein Verfahren zum Ansteuern zumindest einer elektronisch angesteuerten Parkbremseinrichtung bei einem Fahrzeug, wobei die Parkbremseinrichtung in Abhängigkeit von Motor- und/oder Getriebeparametern in vorbestimmten Betriebszuständen des Fahrzeuges unterstützend eingesetzt wird. Ein weiterer Anwendungsbereich der Verfahrensweise liegt bei einer Vorbereitung eines Bremsvorganges für das Fahrzeug. Insbesondere bei Lamellenbremsen wird zu Beginn des Bremsvorganges beim Betätigen des Bremspedals lediglich das Luftspiel zwischen den Lamellen aufgehoben. Eine Bremswirkung tritt dabei noch nicht ein, so dass der Bremsvorgang verzögert wird. Die elektronische Parkbremseinrichtung kann zum Reduzieren oder Aufheben des Luftspiels zwischen den Lamellen aktiviert werden, wenn ein vorbestimmter negativer Gradient im Verlauf der Betätigungsbewegung des Fahrpedals erkannt wird. Wenn beispielsweise ermittelt wird, dass der Fahrer die Betätigung des Fahrpedals zügig beendet und auf das Bremspedal wechselt, kann die elektronische Parkbremseinrichtung aktiviert werden, um dem Fahrer dadurch eine schnellere Bremsung des Fahrzeuges zu ermöglichen.

Ebenfalls sind Systeme bekannt, welche den Fahrer als Anfahrhilfe beim Anfahren an einem Berg durch eine automatische Bremsung unterstützen. Bspw. beschreibt die DE10218825 in einer bevorzugten Weiterbildung eine Kraftfahrzeugbremsanlage, bei der an Steigungen eine Aktivierung der Parkbremsfunktion automatisch nach Erreichen des Fahrzeugstillstandes aus einer Vorwärtsfahrt erfolgt. Auf diese Weise wird ein ungewolltes Zurückrollen des Fahrzeuges weitgehend verhindert. Bei einer vorteilhaften Ausgestaltung der soeben erwähnten Ausführungsform erfolgt die Aktivierung der Parkbremsfunktion erst, wenn die Betriebsbremse gelöst wird. Dem liegt die Überlegung zugrunde, dass ein Zurückrollen des Fahrzeuges nicht auftreten kann, solange die Betriebsbremse betätigt ist, so dass durch diese Ausgestaltung unnötige Aktivierungen der Parkbremsfunktion vermieden werden.

Aus dem Stand der Technik ist weiter die Schrift DE 10 2009 037 382 A1 bekannt. Hierin wird beschrieben: Bei einem Verfahren zum Einschleifen einer Feststellbremse eines Kraftfahrzeugs wird nach einem Schließen der Feststellbremse und einer Aktivierung einer Einschleifroutine während eines anschließenden Fahrvorgangs ein Stellsignal für ein Stellorgan der Feststellbremse generiert, über das der Schließzustand der Feststellbremse während des Fahrvorgangs zum Einschleifen der Feststellbremse kontrolliert wird. Weiterhin wird ein zur Durchführung des Verfahrens geeignetes System angegeben. Hierdurch wird ein einfaches und sicheres Einschleifen einer elektromechanischen Fahrzeugbremse ermöglicht, das fernab eines Prüfstands z.B. nach einem Wechsel der Beläge der Feststellbremse durchführbar ist.

Wenn nun bei einer autonomen oder teilautonomen Funktion die Betriebsbremsanlage ausfällt - beispielsweise wegen eines Fehlers am Bremsaktuator oder Bremsen-Steuergerät- wird das Fahrzeug nicht mehr automatisch abgebremst, so dass es zu einer Kollision mit einem anderen Objekt kommen kann.

### Offenbarung der Erfindung

Es ist daher die Aufgabe der vorliegenden Erfindung, die Verfügbarkeit sowie die Sicherheit von autonomen oder teilautonomen Funktionen zu erhöhen. Gelöst wird diese Aufgabe gemäß der Erfindung durch die im Patentanspruch 1 sowie in Patentanspruch 9 angegebenen Merkmale. Weitere Ausgestaltungen der Erfindung sind Gegenstand von Unteransprüchen.

Das erfindungsgemäße Verfahren zum Betrieb eines Kraftfahrzeugs, wobei wenigstens ein autonomer oder teilautonomer Betrieb des Kraftfahrzeugs aktivierbar ist und das Kraftfahrzeug eine Betriebsbremse und eine Parkbremse aufweist, wobei in Reaktion auf einen erkannten Betriebszustand des Kraftfahrzeugs die Parkbremse aus einem Ruhezustand in einen vorbestimmen Betriebszustand gebracht wird, wobei der vorbestimmte Betriebszustand der Parkbremse derart bestimmt ist, dass die Parkbremse keine oder eine gegenüber der Vollaktivierung deutlich geringere Bremswirkung erzeugt, ist **dadurch gekennzeicht dass** ein weiterer Betriebszustand der Parkbremse derart ausgebildet ist, dass
- bei einer Fehlfunktion der Betriebsbremse und/oder von Komponenten einer Betriebsbremsanlage und/oder
- bei einer Nichtverfügbarkeit der Betriebsbremse und/oder von Komponenten einer Betriebsbremsanlage,
- die Parkbremse während des autonomen oder teilautonomen Betriebs wenigstens teilweise eine Funktion der Betriebsbremse übernimmt, um den aktivierten autonomen oder teilautonomen Betrieb wenigstens teilweise auszuführen.

Hierunter wird verstanden, dass ein besagtes Kraftfahrzeug wenigstens eine Funktion zum autonomen oder teilautonomen Betrieb des Kraftfahrzeugs aufweist. Wird ein bestimmter Betriebszustand des Kraftfahrzeugs erkannt, wird in Reaktion und abgestimmt darauf die Parkbremse aktiviert. Zusätzlich zu den bereits bekannten Ansteuerungen von Lenkwinkel, Druckmodulation (Betriebsbremse) und Beschleunigungsvorgang (Elektronisches Gaspedal) wird die Parkbremse ebenfalls in den autonomen oder teilautonomen Betrieb mit eingebunden.

Bei einer solchen Aktivierung wird die Parkbremse aus einem Ruhezustand in einen vorbestimmten Betriebszustand gebracht.

Der vorbestimmte Betriebszustand der Parkbremse ist derart bestimmt, dass die Parkbremse eine gegenüber der Vollaktivierung der Parkbremse deutlich geringere Bremswirkung erzeugt. Der Parkbremssteller wird dabei so angesteuert, dass nicht nur der Leerweg und/oder das Lüftspiel überwunden werden, sondern auch eine Klemmkraft für die Brem-se bereit gestellt wird. Die Größe der Klemmkraft erfolgt in Abhängigkeit von dem erkannten Betriebszustand des Kraftfahrzeugs. Die Parkbremse übernimmt damit den Fahreranteil, welcher in das System damit nicht eingreifen muss. Die automatisierten Funktionen können damit deutlich länger aufrecht erhalten werden.

Vorteilhaft ist dabei vorgesehen, dass das Verfahren, dadurch gekennzeichnet ist, dass als Betriebszustand des Kraftfahrzeugs erkannt wird,
- eine Aktivierung des autonomen oder teilautonomen Betriebs und/oder
- ein Stillstand des Kraftfahrzeugs und/oder
- eine Verzögerung des Kraftfahrzeugs und/oder
- eine Neigung des Kraftfahrzeugs und/oder
- wenigstens ein Ergebnis eines, insbesondere zyklischen, Tests von Komponenten und Betriebszuständen des Fahrzeugs die für den autonomen oder teilautonomen Betrieb erforderlich sind.

Hierunter wird verstanden, dass verschiedene und/oder mehrere Faktoren berücksichtigt werden können, um einen Betriebszustand des Kraftfahrzeugs zu definieren. In Reaktion auf den erkannten Betriebszustand des Kraftfahrzeugs wird die Parkbremse aus einem Ruhezustand in einen vorbestimmen Betriebszustand gebracht. Der Betriebszustand kann dabei ein aktivierter autonomer oder teilautonomer Betrieb des Fahrzeugs sein. Weiterhin können weitere fahrzeugbezogene Faktoren ermittelt und berücksichtigt werden, wie beispielsweise den Stillstand oder eine Verzögerung des Kraftfahrzeugs. Vorteilhaft kann auch die Neigung des Kraftfahrzeugs berücksichtigt werden. Diese kann bspw. anzeigen, ob und in welche Richtung ein Kraftfahrzeug an einer Steigung steht und entsprechend eine geänderte Vorbestimmung des Betriebszustands der Parkbremse und/oder ein geändertes Verfahren festlegen.

Weiterhin erweist es sich als vorteilhaft die Funktionsfähigkeit des autonomen oder teilautonomen Betriebs zu überprüfen. Der Betriebszustand des Kraftfahrzeugs kann dabei basierend auf ermittelten oder erkannten Fehlern und/oder einer Nichtverfügbarkeit des autonomen oder teilautonomen Betriebs beschreiben werden. Weiterhin können vorteilhaft hierzu Ergebnisse eines Tests von Komponenten die für den autonomen oder teilautonomen Betriebs erforderlich sind verwendet werden. Hierzu können zyklischen Tests während der Ausführung der teilautonomen, bzw. autonomen Fahrfunktion ausgeführt werden.

Hierbei können die elektrischen Komponenten der Bremsanlage einschließlich der zugehörigen Endstufen, z.B. auch außerhalb eines aktiven Bremseneingriffs überprüft werden. Hierzu zählen bspw. elektrische Test der Ventile auf Leitungsunterbrechung, elektrische Test der Ventile auf Leitungskurzschluss, elektrische Tests des Pumpenmotors. Tritt hierbei ein Fehler auf, bzw. sind einzelne Werte außerhalb einer Spezifikation, so kann vorsorglich der vorbestimmte Betriebszustand der Parkbremse eingestellt werden.

In vorteilhafter Weise kann auch der Bremsdruck oder sonstige Komponenten der Bremsanlage überprüft werden, um die Funktionsfähigkeit zu analysieren. Grund für die ungenügende Bremsdruckbereitstellung können dabei z.B. defekte Pumpenelemente oder zu viel Luft im Bremskreis sein.

Neben den Komponenten der Bremsanlage können auch weitere Systeme und deren Komponenten für den autonomen oder teilautonomen Betrieb notwendig sein. Hierzu können bspw. eine elektrische Lenkung sowie Motorsteuerung, etc. zählen. Deren Funktionsfähigkeit kann ebenfalls einen Betriebszustand des Kraftfahrzeugs charakterisieren und ist daher entsprechend zu überprüfen, bzw. die Ergebnisse solcher Tests auszuwerten.

Weiter ist vorgesehen, dass im Verfahren der vorbestimmte Betriebszustand der Parkbremse einen Zustand der Parkbremse darstellt, in welchem
- die Parkbremse eine vorbestimmte Bremswirkung aufbringt, wobei vorgesehen ist, dass
- eine Position der Parkbremse eingestellt ist, mittels der ein teil- oder vollbeladenes Kraftfahrzeugs an einer Steigung gehalten wird.

Die Vorbestimmung des Betriebszustands der Parkbremse erfolgt wie bereits ausgeführt in Reaktion auf einen erkannten Betriebszustand des Kraftfahrzeugs. Die Parkbremse bringt eine vorbestimmte Bremswirkung auf, um ein Kraftfahrzeug an einer Steigung zu halten. Sollte erkannt werden, dass ein vorbestimmter Betriebszustand der Parkbremse nicht geeignet ist einen vorbestimmten Effekt zu erzielen, kann bspw. in Reaktion auf einen neuen erkannten Betriebszustand des Kraftfahrzeugs ein neuer vorbestimmter Betriebszustand der Parkbremse eingestellt werden.

Gemäß einer vorteilhaften Ausführungsform ist vorgesehen, dass das Verfahren dadurch gekennzeichnet ist, dass eine Bestimmung des vorbestimmten Betriebszustand der Parkbremse in Abhängigkeit erfolgt von einem vorliegenden Verschleiß wenigstens einer Betriebsbremse und/oder Parkbremse.

Hierunter ist zu verstehen, dass weitere Faktoren bei der Bestimmung des vorbestimmten Betriebszustandes der Parkbremse berücksichtigt werden können. Neben den zuvor genannten externen Faktoren sind auch interne Faktoren von Bedeutung. Hierzu zählt beispielsweise der Verschleiß bei einer Bremsenkomponente. Die Bestimmung des Betriebszustands der Parkbremse erfolgt dabei angepasst an vorliegenden Verschleiß. Darunter ist zu verstehen, dass ein vorliegender Verschleiß bei der Bestimmung des Betriebszustands der Parkbremse berücksichtigt wird. Aufgrund der Berücksichtigung kann sichergestellt werden, dass die gewünschte oder erforderliche Bremswirkung in der bestimmten Weise eintritt. Das heißt, ein möglicher Verschleiß wird bei der Minimierung oder Einstellung eines Lüftspiel und/oder der Leerweg berücksichtigt, bspw. durch eine angepasste, d.h. erweiterte Anfahrlänge des Parkbremsstellers aus einer Ruheposition hin zu dem vorbestimmten Betriebszustand der Parkbremse.

Gemäß einer vorteilhaften Ausgestaltung ist vorgesehen, dass das Verfahren dadurch gekennzeichnet ist, dass die Parkbremse aus dem Ruhezustand in den vorbestimmten Betriebszustand gebracht wird, wobei der vorbestimmte Betriebszustands der Parkbremse eingestellt wird mittels
- einer Wegcharakteristik, wobei die Parkbremse einen definierten Weg ausgehend von dem Ruhezustand in Richtung des vorbestimmten Betriebszustands der Parkbremse angesteuert wird und/oder
- einer Stromcharakteristik, wobei eine mittels einem Elektromotor aktuierte Parkbremse bis zu einer maximalen Stromstärke und/oder einem definierten Anstieg einer Stromstärke des Elektromotors angesteuert wird und/oder
- einer Kraftcharakteristik, wobei die Parkbremse bis zu einer definierten maximalen, insbesondere mittels eines Kraftschätzers ermittelten, Klemmkraft angesteuert wird.

Hierunter ist zu verstehen, dass eine Einstellung des vorbestimmten Betriebszustands der Parkbremse mit unterschiedlichem Vorgehen erfolgen kann. Auch eine Kombination unterschiedlicher Ansätze ist denkbar. Unter Einstellung ist in diesem Zusammenhang zu verstehen, in welche Position bspw. der Parkbremssteller genau gebracht wird, um die vorbestimmte Wirkung zu erzielen. Die Einstellung legt hiermit nicht nur eine Bestimmung der Position bspw. des Parkbremsstellers fest, sondern beschreibt auch ein Anfahren, insbesondere ein Erreichen dieser Position. Beispielsweise sind drei Vorgehen aufgelistet, mittels welcher der vorbestimmte Betriebszustand der Parkbremse eingestellt werden kann.

Hierzu zählen die Einstellung mittels eines definierten Verfahrwegs der Parkbremse, bzw. des Parkbremsstellers. Dies bedeutet, dass ausgehend von dem Ruhezustand die Parkbremse, bzw. der Parkbremssteller, einen definierten Weg in Richtung des vorbestimmten Betriebszustands, insbesondere in Schließrichtung der Parkbremse ausgelenkt wird. Die Auslenkung kann bspw. mittels eines Elektromotors mit Spindelantrieb erfolgen. Hierbei können auch Untersetzungsgetriebe eingesetzt werden.

Eine weitere vorteilhafte Möglichkeit zur Einstellung des vorbestimmten Betriebszustands der Parkbremse ist die Verwendung einer Stromcharakteristik. Die Parkbremse wird dabei aus einer ersten Position mittels bspw. eines Elektromotors in Schließrichtung verstellt. Hierbei wird der Leerweg und Lüftspiel der Parkbremse überwunden. Die Stromaufnahme des Elektromotors ist hierbei relativ konstant. Sobald allerdings der Leerweg und das Lüftspiel überwunden ist und ein Aufbau eines Bremskraft erfolgt, steigt die Stromaufnahme an. Mittels einer Stromcharakteristik wird eingestellt bei welcher Stromstärke der vorbestimmte Betriebszustand der Parkbremse eingestellt ist und diese Position beibehalten. Diese Stromstärke kann absolut oder relativ zur Stromstärke der Überwindung des Leerwegs und Lüftspiels definiert werden. Mittels der Stromstärke kann in diesem Fall eine auftretende Kraft, bspw. Klemmkraft der Bremse abgeschätzt werden.

Alternativ kann der Betriebszustand der Parkbremse auch direkt mittels einer Kraftcharakteristik eingestellt werden. Hierzu ist ein Kraftschätzer nötig, welcher bspw. in der Bremsanlage verbaut ist.

In einer Weiterbildung ist vorteilhaft vorgesehen, dass das Verfahren dadurch gekennzeichnet ist, dass der vorbestimmte Betriebszustand der Parkbremse derart bestimmt wird, dass in einem ersten Schritt die Parkbremse in Schließrichtung in eine erste Position gebracht und in einem zweiten Schritt die Parkbremse in Öffnungsrichtung in eine zweite Position gebracht wird, wobei insbesondere vorgesehen ist, dass in der ersten Position eine größere durch die Parkbremse bewirkte Bremswirkung auftritt als in der zweiten Position.

Hierbei soll eine Art Kalibrierung der Parkbremse erfolgen. Darunter wird in diesem Zusammenhang verstanden, dass zunächst ermittelt werden soll, wie groß der aktuell vorliegende Leerweg und Lüftspiel ist, sowie, bzw. in welcher Einstellung der Parkbremse, d.h. bspw. Position des Parkbremsstellers eine bestimmte Bremswirkung auftritt. Ausgehend von dieser ersten Position der Parkbremse, bzw. des Parkbremsstellers, wird eine zweite Position der Parkbremse, bzw. des Parkbremsstellers eingestellt. Diese zweite Position ist darüber charakterisiert, dass in der ersten Position eine größere Bremswirkung auftritt. Die erste Position ist dabei durch insbesondere eine geringe Bremswirkung, bspw. bei einfachem Überwinden des Leerwegs und Lüftspiels, sowie eine mittlere Bremswirkung charakterisiert. Die zweite Position kann ebenfalls eine mittlere, wenn auch geringere Bremswirkung aufweisen, insbesondere ist diese aber durch eine geringe oder keine Bremswirkung charakterisiert. Bspw. kann die Parkbremse zunächst in Schließrichtung angesteuert werden bis ein Kraftanstieg erkennbar ist. Anschließend wird die Parkbremse einen definierten, insbesondere kleinen, Weg wieder aufgefahren. Durch diese Kalibrierung werden der Leerweg und das Lüftspiel deutlich reduziert und die Parkbremse wird deutlich schneller wirksam. Der Unterschied zum normalen Einstellen mittels einer Weg- oder Kraftcharakteristik liegt darin, dass bei der Einstellung mehrere, zum Teil unbekannte Parameter berücksichtigt werden müssen, wie bspw. Druck, Nachspannweg, Verschleiß der Beläge, Zangensteifigkeit. Derartige Parameter können durch den Vorgang der Kalibrierung erfasst und mit berücksichtigt werden. Je nach Strategie kann damit der Leerweg und damit der Start des Kraftaufbaus um ein Drittel bis zu zwei Drittel verringert werden.

Der Betriebszustand der Parkbremse wird derart bestimmt, dass durch eine Aktuierung der Parkbremse eingestellte Bremswirkung ein Halten eines Kraftfahrzeugs an einer Steigung bewirkt.

Hierunter wird verstanden, dass durch den vorbestimmten und eingestellten Betriebszustand der Parkbremse verschiedene Effekte erzielt werden könnten. Hierzu zählt, dass ein Fahrzeug an einer Steigung gehalten werden kann. Ein weiterer Effekt ist bspw., dass die Bewegung eines Kraftfahrzeugs abgebremst wird oder eine Bewegung des Kraftfahrzeugs in eine definierte Richtung vermieden wird. Beispielsweise kann bei einem Parkmanöver eine Bewegung des Kraftfahrzeugs in eine bestimmte Richtung ermöglicht werden, wenn diese Bewegung in dieser Richtung für das Parkmanöver notwendig ist. Eine Bewegung zu diesem Zeitpunkt entgegen dieser Richtung kann mittels des vorbestimmten Betriebszustands der Parkbremse vermieden werden. Selbstverständlich ist vorgesehen, dass die gewünschten Antriebsrichtungen auch innerhalb eines autonomen, bzw. teilautonomen Fahrmanövers veränderlich sind.

In einer weitergebildeten Ausgestaltung des erfindungsgemäßen Verfahrens ist vorgesehen, dass der Betriebszustands der Parkbremse dynamisch an eine Reaktion des Kraftfahrzeugs auf den vorbestimmten Betriebszustand der Parkbremse angepasst wird.

Hierunter wird verstanden, dass ein vorbestimmter Betriebszustand der Parkbremse in einem ersten Schritt, insbesondere in Abhängigkeit eines erkannten Betriebszustands des Kraftfahrzeugs eingestellt wird. Der Betriebszustand des Kraftfahrzeugs kann allerdings weiterhin ermittelt und ausgewertet werden. Ändert sich der Betriebszustand des Kraftfahrzeugs, werden entsprechende Änderungen im Betriebszustand der Parkbremse eingestellt. Weiterhin werden die Reaktionen des Kraftfahrzeugs auf den vorbestimmten Betriebszustand der Parkbremse ermittelt und ausgewertet. Verläuft eine Reaktion des Kraftfahrzeugs bspw. nicht wie definiert oder erwartet, kann der Betriebszustand der Parkbremse dynamisch angepasst werden. Tritt bspw. eine Verzögerung des Kraftfahrzeugs nicht in der erwarteten Höhe ein, kann der Betriebszustand der Parkbremse derart angepasst werden, dass durch eine Verstärkung der Bremswirkung eintritt.

Erfindungsgemäß ist ein weiterer Betriebszustand der Parkbremse derart aus-gebildet sein, dass bei einer Fehlfunktion der Betriebs-bremse und/oder von Komponenten einer Betriebsbremsanlage und/oder bei einer Nichtverfügbarkeit der Betriebsbremse und/oder von Komponenten einer Betriebsbremsanlage die Parkbremse während des autonomen oder teilautonomen Betriebs wenigstens teilweise eine Funktion der Betriebsbremse übernimmt, um den aktivierten autonomen oder teilautonomen Betrieb wenigstens teilweise auszuführen.

Hierunter kann verstanden werden, dass bei einem Fehlfunktion oder Ausfall oder sonstigen Nichtverfügbarkeit einer vorgesehenen Komponente der Betriebsbremsanlage die Parkbremse die Funktion der Betriebsbremse übernimmt. Eine Übernahme kann teilweise sein. Sie dient dazu, den aktivierten autonomen oder teilautonomen Betrieb auszuführen. Eine Ausführung kann ebenfalls teilweise sein. Die Parkbremse kann dafür eingesetzt werden, die derzeit aktive Funktion, z.B. ein autonomes Parkmanöver zu Ende zu füh-ren. Weiterhin kann die Parkbremse mittels einer Vollaktivierung ein Feststellen des Kraftfahrzeugs nach dem Abschluss des autonomen oder teilautonomen Betriebs ermöglichen. Alternativ ist ebenfalls eine Vollaktivierung der Parkbremse und damit ein Feststellen des Kraftfahrzeug bei einem Fehler möglich.

Zu den Komponenten der Betriebsbremsanlage können hierbei auch periphere Komponenten, wie Ventile, Endstufen und Aktoren gezählt werden, auch wenn diese ggf. während einem normalen Betriebsbremsvorgangs mittels eines aktuellen ESP-Systems nicht angesteuert sind. Hierfür können spezielle Test Anwendung finden. Unabhängig davon kann bei den aufgezählten Komponenten bei zukünftigen, bspw. By-Wire, Bremssystemen eine Ansteuerung vorgesehen sein, durch welche eine Überprüfung erleichtert werden kann.

Die Ausführung dieser Weiterbildung kann so verstanden werden, dass der erfindungsgemäße vorbestimmte Betriebszustand der Parkbremse dem in der Weiterbildung beschriebenen weiteren Betriebszustand der Parkbremse entspricht. Alternativ ist ebenfalls möglich, dass bspw. in der Weiterbildung in einem ersten Schritt der erfindungsgemäße vorbestimmte Betriebszustand der Parkbremse eingestellt wird und in einem weiteren Schritt der weitere Betriebszustand eingestellt wird.

Gemäß einer vorteilhaften Ausführungsform ist vorgesehen, dass bei der Fehlfunktion und/oder Nichtverfügbarkeit der Betriebsbremse und/oder von Komponenten der Betriebsbremsanlage
- ein Antriebsmoment eines Fahrzeugmotors in einem ersten Schritt reduziert und in einem weiteren Schritt neu eingeregelt wird und/oder
- ein Antriebsmoment eines Fahrzeugmotors in Abhängigkeit der Steigungsrichtung des Einparkmanövers angepasst wird, wobei insbesondere das Antriebsmoment bei positiver Steigung (bergauf) teilweise reduziert wird und/oder das Antriebsmoment bei negativer Steigung (bergab) ganz reduziert wird.

Die Ausführung dieser Weiterbildung kann so verstanden werden, dass ein autonomer oder teilautonomer Betrieb des Fahrzeug auch unter Berücksichtigung weiterer Faktoren, insbesondere in Abstimmung mit der Parkbremse, auch bei einem Fehler der Betriebsbremse sicher ausgeführt und/oder beendet werden soll. Hierbei kann beispielsweise das Antriebsmoment des Fahrzeugmotors berücksichtigt werden. Das Antriebsmoment wird dabei in einem ersten Schritt reduziert und anschließend neu eingestellt. Das Antriebsmoment kann auch unter Berücksichtigung weiterer Faktoren angepasst werden. Bspw. kann dieses bei einem autonomen oder teilautonomen Fahrmanöver, bei welchem sich das Fahrzeug bergab bewegt, ganz reduziert werden. Alternativ kann dieses bei einem autonomen oder teilautonomen Fahrmanöver, bei welchem sich das Fahrzeug bergauf bewegt nur teilweise reduziert werden. Damit kann ein Teil des Antriebsmoments weiterhin für die Bewegung des Fahrzeugs in Richtung bergauf eingesetzt werden.

Gemäß einer weiteren vorteilhaften Ausführungsform ist vorgesehen, dass der autonome oder teilautonome Betrieb des Kraftfahrzeugs als "Einparkhilfe" und/oder "adaptive Geschwindigkeitsregelung" und/oder "autonomes Ausweichmanöver" und/oder "autonome Notbremsung" ausgestaltet ist. Hierdurch soll selbstverständlich nicht ausgeschlossen werden, das weitere Ausgestaltungsformen der Fahrassistenz umgesetzt werden können.

Die erfindungsgemäße Vorrichtung zum Betrieb eines Kraftfahrzeugs, wobei wenigstens ein autonomer oder teilautonomer Betrieb des Kraftfahrzeugs aktivierbar ist und das Kraftfahrzeug eine Betriebsbremse und eine Parkbremse aufweist, weist Mittel auf, mittels der in Reaktion auf einen erkannten Betriebszustand des Kraftfahrzeugs die Parkbremse in einen vorbestimmen Betriebszustand gebracht wird, wobei der vorbestimmte Betriebszustand der Parkbremse derart bestimmt ist, dass die Parkbremse eine gegenüber der Vollaktivierung deutlich geringere Bremswirkung erzeugt.

Unter Mittel sind in diesem Zusammenhang insbesondere Komponenten einer Parkbremse zu verstehen. Als Parkbremse stehen verschiedene Konzepte zur Verfügung, bei welchen unterschiedliche Komponenten und Wirkungen vorliegen können. Ein Konzept ist bspw. der Cable-Puller. Ein weiteres Konzept ist, bspw. der Motor-on-Caliper, ein am Bremssattel befindlicher Elektromotor mit entsprechenden Durchtrieb auf die Bremsbacken. Die Wirkung kann sich auf eine Achse des Fahrzeugs erstrecken, bspw. die Vorderachse und/oder die Hinterachse oder radindividuell ausgeführt sein. Weiterhin kann über diese Parkbremssteller eine bestehende Radbremse angesprochen werden, oder die Bremswirkung mittels einer neue Radbremse umgesetzt werden.

Diese Aktuatoren der Parkbremsanlage, werden beispielsweise angesteuert, um das Fahrzeug zu bremsen. Der autonome Bremseingriff kann entweder vom Steuergerät der Betriebsbremsanlage - sofern dieses funktioniert - oder von einem beliebigen anderen Steuergerät durchgeführt werden. Ebenfalls ist ein eigenes Steuergerät für die Parkbremse möglich. Die Funktion dieses Steuergeräts wird vorzugsweise von einem anderen Steuergerät überwacht, das in den Fahrbetrieb eingreift, wenn ersteres einen Fehler hat. Wenn ersteres ausfällt, wird das andere Steuergerät vorzugsweise selbsttätig aktiv und greift in den Fahrbetrieb ein. Die Steuergeräte stehen z.B. über einen Bus (z.B. CAN) miteinander in Verbindung. Damit kann ein Regel- und Steuergerät, Bus-System sowie ein entsprechender Algorithmus als weitere Mittel angesehen werden.

Gemäß einer bevorzugten Weiterbildung der vorliegenden Erfindung sind Mittel vorgesehen, mittels welcher der Betriebszustands der Parkbremse dynamisch an eine Reaktion des Kraftfahrzeugs auf den vorbestimmten Betriebszustand der Parkbremse angepasst wird.

Wie bereits zur Weiterbildung des Verfahrens ausgeführt, kann der Betriebszustand der Parkbremse dynamisch an weitere Faktoren angepasst werden. Einer dieser Faktoren kann das Fahrzeug selbst sein. Hierbei kann insbesondere eine Reaktion des Fahrzeugs auf den vorbestimmten Betriebszustand der Parkbremse verstanden werden. Dies kann beispielsweise ein Rutschen des Fahrzeugs sein, oder eine abweichende Verzögerung. Ebenfalls könne auch weitere Faktoren des Fahrzeugs oder der Umgebung berücksichtigt werden. Alternativ kann die Anpassung an weitere Faktoren, bspw. eine sich ändernde Steigung, erfolgen. Zur Ermittlung dieser Faktoren können bspw. vorhandene oder zu integrierende Sensoren verwendet werden. Weitere Mittel zur Auswertung können bspw. durch Regel- und Steuergeräte, Recheneinheiten, Algorithmen, Datenbanken mit hinterlegten Werten, sowie Kommunikationssysteme dargestellt werden.

In vorteilhafter Weise sind Mittel vorgesehen, mittels welcher der vorbestimmte Betriebszustand der Parkbremse derart bestimmt wird, dass in einem ersten Schritt die Parkbremse in Schließrichtung in eine erste Position gebracht und in einem zweiten Schritt die Parkbremse in Öffnungsrichtung in eine zweite Position gebracht wird, wobei insbesondere vorgesehen ist, dass in der ersten Position eine größere durch die Parkbremse bewirkte Bremswirkung auftritt als in der zweiten Position.

Wie bereits ausgeführt kann das damit verbundene Vorgehen als Kalibrierung angesehen werden. Die hierzu benötigten Mittel beziehen sich im Großen auf die zuvor genannten. Weiterhin sind hierdurch Mittel zu verstehen, die eine Ermittlung der ersten und zweiten Position ermöglichen. Hierunter können bspw. Wegsensoren, Drehwinkelsensoren, Kraftsensoren sowie Auswertemöglichkeiten wie Recheneinheiten sowie Steuer- und Regelungseinrichtungen zur Steuerung einer Stromstärke zählen.

In einer vorteilhaften Weiterbildung sind weiter Mittel vorgesehen, mittels welcher die erste und zweite Position durch Auswertung einer Klemmkraft, welche durch eine mittels einem Elektromotor aktuierte Parkbremse bewirkt ist, bestimmt werden, wobei insbesondere vorgesehen ist, dass die Klemmkraft auf Basis einer Stromstärke des Elektromotors bestimmt wird. Insbesondere hierbei sind auch Vorrichtungen zur Ermittlung einer Stromstärke und Ansteuerung einer Stromstärke bei einem Elektromotor als derartige Mittel zu verstehen.

### Ausführungsbeispiele (Zeichnungen / Beschreibung):

Die Erfindung wird nachfolgend anhand von den in den Zeichnungen dargestellten Ausführungsbeispielen näher erläutert, ohne dass dabei eine Beschränkung der Erfindung erfolgt. Dabei zeigt:
Figur 1 eine schematische Blockdarstellung eines Fahrassistenzsystems, das eine hohe Sicherheit und Verfügbarkeit der automatisierten Funktionen besitzt, und
Figur 2 ein Flussdiagramm zur Darstellung der wesentlichen Verfahrensschritte eines Verfahrens zum Absichern eines Fahrerassistenzsystems bei einem Fehler in der Betriebsbremsanlage bei gleichzeitiger hoher Verfügbarkeit des Systems durch Anlegen des Parkbremsstellers, und
Figur 3 ein Flussdiagramm zur Darstellung der wesentlichen Verfahrensschritte eines Verfahrens zum Absichern eines Fahrerassistenzsystems bei einem Fehler in der Betriebsbremsanlage bei gleichzeitiger hoher Verfügbarkeit des Systems durch Einstellung einer Haltekraft an einer Steigung, und
Figur 4 einen beispielhaften Strom- und Kraftverlauf bei einer Parkbremse über die Zeit, und
Figur 5 einen Schnitt durch eine elektromechanische Feststellbremse für ein Fahrzeug, bei der die Klemmkraft über einen elektrischen Bremsmotor erzeugt wird.

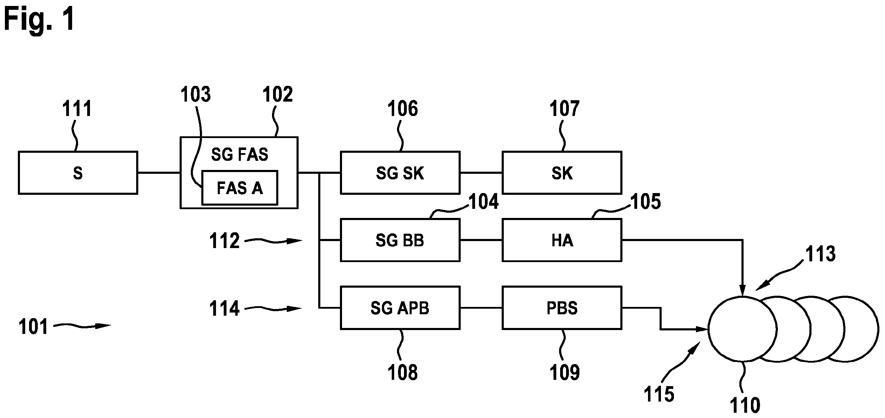

Die **Figur 1** zeigt eine schematische Blockdarstellung eines Fahrassistenzsystems, das insgesamt mit dem Bezugszeichen 101 bezeichnet ist. Das Fahrassistenzsystem 101 umfasst im Wesentlichen ein Steuergerät 102 für das Fahrassistenzsystem 101 mit einem Fahrassistenzsystem-Algorithmus 103 sowie eine Betriebsbremsanlage 112 bestehend aus einem Druckerzeuger 105 (bspw. ein Hydroaggregat) mit zugehörigem Steuergerät 104 und zum Modulieren der an den Radbremsen 110 wirkenden Bremskräfte, sowie den Radbremsen 110.

Neben der Betriebsbremsanlage 112 umfasst das Fahrassistenzsystem 101 auch eine Parkbremsanlage 114 (auch als automatische Parkbremse oder Feststellbremse bezeichnet), bestehend aus einem Steuergerät 108, einem Parkbremssteller 109 sowie ebenfalls Radbremsen 110.

Unter Radbremse 110 sind hierbei alle Komponenten zusammengefasst, welche bspw. nach dem Hydroaggregat als Druckerzeuger 105, bzw. einem elektrischen Motor als Parkbremssteller 109, an der Erzeugung der Klemmkraft beteiligt sind. Zur genaueren Differenzierung der Herkunft der Bremskraft, wird die Radbremse 110 in Betriebsbremse 113 sowie Parkbremse 115 unterschieden, wobei die Betriebsbremse 113 von dem Druckerzeuger 105 angesteuert wird sowie die Parkbremse 115 von dem Parkbremssteller 109.

Weiter Komponenten des Fahrassistenzsystems 101 werden als sonstige Komponenten 107 (bspw. Antriebsmotor, Lenkung, hydraulische Bremsanlage, automatisches Getriebe, etc.) bezeichnet, welche ebenfalls mit zugehörigen Steuergeräten 106 ausgestattet sein können. Darüber hinaus weist das Fahrassistenzsystem eine Umfeldsensorik 111 auf, z.B. basierend auf Ultraschall. Diese dient einem Abtasten der Umgebung. Weiter können Beschleunigungs- sowie Lagesensoren eingesetzt werden.

Bei beispielsweise einem Parkvorgang, bei dem das Fahrassistenzsystem 101 aktiv ist, überwacht der Fahrassistenzsystem-Algorithmus 103 die Umgebung des Fahrzeugs in Bezug auf umliegende Objekte und greift mittels der Betriebsbremsanlage 104, 105, 110 autonom in den Fahrbetrieb ein, wenn sich das Fahrzeug einem anderen Objekt zu stark nähert. Der Fahrassistenz-Algorithmus 103 ist hier in einem eigenen Fahrassistenz-Steuergerät 102 vorgesehen, kann aber grundsätzlich auch in jedem anderen Steuergerät integriert sein.

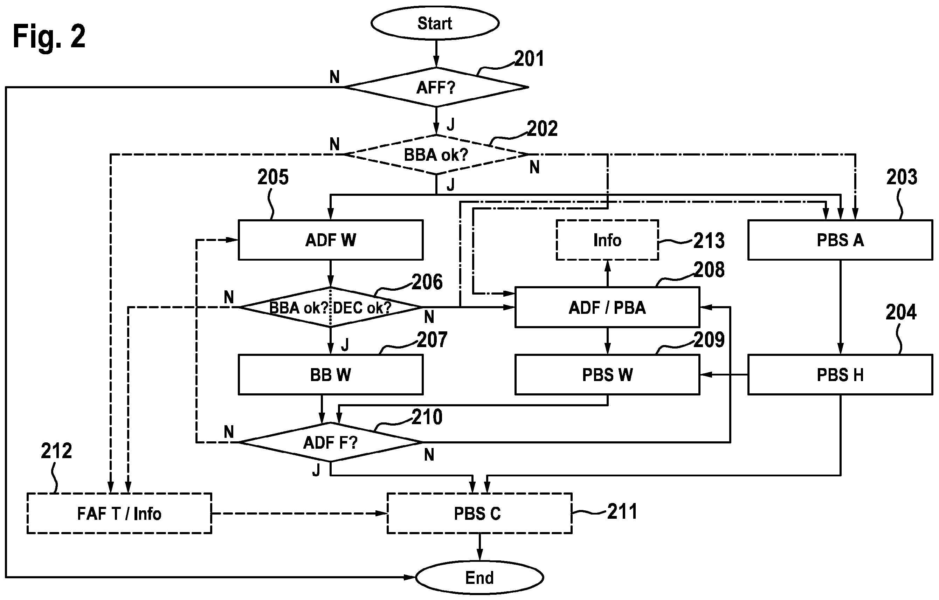

Um für den Fall einer defekten Betriebsbremsanlage 112 eine Kollision zu verhindern, ist das Fahrassistenzsystem 101 mit einer zweiten Bremsanlage, der Parkbremsanlage 114 gekoppelt, mittels dessen das Fahrzeug abgebremst werden kann. Die Parkbremsanlage114 besteht aus einem Steuergerät 108 mit wenigstens einem Parkbremssteller 109 sowie Radbremsen 110. Die wesentliche Steigerung der Verfügbarkeit sowie Sicherheit der automatisierten Funktion wird allerdings nicht durch das Vorhandensein eines zweiten unabhängigen Aktors, bspw. der Parkbremse, erreicht, sondern dadurch, dass die Parkbremse in Reaktion auf einen erkannten Betriebszustand des Kraftfahrzeugs in einen vorbestimmten Betriebszustand gebracht wird. Die Arbeitsweise des Gesamtsystems wird im Folgenden anhand von Figur 2 dargestellt.

Die **Figur 2** zeigt ein Flussdiagramm zur Darstellung der wesentlichen Verfahrensschritte eines Verfahrens zum Absichern eines Fahrerassistenzsystems bei einem vorliegenden oder auftretenden Fehler in der Betriebsbremsanlage bei gleichzeitiger hoher Verfügbarkeit des Systems durch Verwendung eines zweiten unabhängigen Aktor am Beispiel eines autonomes Einparkmanövers.

Dabei wird in einem Schritt 201 zunächst ermittelt, ob eine Fahrassistenzfunktion aktiviert ist, bzw. aktiv ist. Falls dies zutrifft (J) kann in einem Schritt 202 überprüft werden, ob die Betriebsbremse in Ordnung ist. Durch Überwachungsfunktionen können ein Teil der Fehler eines Hydro-Aggregats frühzeitig erkannt werden. Zu diesen gehört, z.B. die Leitungsüberwachung der Ventile oder des Motors. Diese Überwachung führt in der Regel dazu, dass Funktionen, die eine hydraulische Druckbereitstellung anfordern, abgeschalten werden. Ist die Betriebsbremse nicht in Ordnung (N) kann in einem Schritt 212 ein Abbruch der Fahrassistenzfunktion sowie eine Benachrichtigung des Fahrers erfolgen.

Alternativ kann auch bei Identifikation eines Fehler der Betriebsbremsanlage (N) im vorgelagerten Überprüfungsschritt 202, die Fahrassistenzfunktion in einem weiteren Schritt 208 mit der Parkbremsanlage ausgeführt. Hierbei übernimmt die Parkbremse die Verzögerungsanforderungen. Die Funktion bleibt damit erhalten und führt zu einer erhöhten Fahrzeug- und Funktionsverfügbarkeit. Hierzu kann auch in einem parallelen, vorgelagerten oder nachgelagerten Schritt 203 der Parkbremssteller 109 in eine Position gebracht, aufgrund welcher der Leerlauf und das Lüftspiel reduziert werden.

Der Schritt 202 als vorgelagerter Schritt kann alternativ weg gelassen werden, bzw. nur während der Ausführung der Fahrassistenzfunktion im Schritt 206 umgesetzt werden. Daher ist er in der Figur 2 gestrichelt eingezeichnet. Falls der Schritt 202 weggelassen ist oder die Überprüfung der Betriebsbremsanlage keine Fehler gezeigt hat (J), wird in einem nächsten Schritt 205 die Fahrerassistenzfunktion ausgeführt. Hierzu werden alle notwendigen Aktoren (bswp. Antriebsmotor, Lenkung, hydraulische Betriebsbremse) angesteuert, um bspw. die Funktion "autonomes Parken" zu erfüllen. Parallel hierzu wird in einem Schritt 203 der Parkbremssteller in eine Position gebracht, aufgrund welcher der Leerlauf und das Lüftspiel reduziert werden. Diese Position wird in einem weiteren Schritt 204 gehalten. Der Schritt 203, 204 kann auch dem Schritt 205 vorgelagert sein.

Beim Ausführen der Fahrerassistenzfunktion wird in einem weiteren Schritt 206 während der Ausführung abgefragt, ob die Betriebsbremsanlage in Ordnung ist. Alternativ oder zusätzlich kann überprüft werden, ob die Verzögerung des Kraftfahrzeugs einem Erwartungswert entsprich. Ist dies der Fall (J), wird in einem Schritt 207 die notwendige Kraftmodulation für die Ausführung der Fahrerassistenzfunktion über die Betriebsbremse umgesetzt.

Sollte vorgesehen sein, dass die Parkbremse nicht direkt beim Ausführen der Fahrassistenzfunktion in den vorbestimmten Betriebszustand gebracht wird, kann dies beispielsweise auch bei einem Erkennen einer entsprechenden Abweichung (N) in Schritt 206 erfolgen. Wird beispielsweise während des Einparkvorgangs durch eine Überwachungsfunktion festgestellt, dass eine Verzögerung des Fahrzeugs nicht dem Erwartungswert entspricht, kann ebenfalls die Parkbremse in den vorbestimmten Betriebszustand gebracht werden. Beispielsweise könnte in diesem Fall eine nichterkannte Schädigung eines hydraulischen Stellers vorliegen. Grund für die ungenügende Bremsdruckbereitstellung kann dabei z.B. defekte Pumpenelemente oder zu viel Luft im Bremskreislauf sein.

Wird in Schritt 206 während der Ausführung ein Fehler (N) erkannt, d.h. sollte bspw. die Betriebsbremsanlage nicht in Ordnung sein oder es wird eine Schädigung des hydraulischen Stellers erkannt, übernimmt die Parkbremse die Verzögerungsanforderungen. Dass heißt, die Fahrassistenzfunktion wird in einem weiteren Schritt 208 mit der Parkbremsanlage ausgeführt. Hierdurch bleibt die Sicherheit für Mensch um Umwelt gewahrt.

Bei einer Ausführung der Fahrassistenzfunktion mit der Parkbremse kann in einem Schritt 213 eine Information abgelegt und/oder dem Fahrer zur Verfügung gestellt werden. Ggf. kann der Fahrer auch in Schritt 213 über eine reduzierte Leistungsbereitstellung informiert werden. Bei dem Ausführen der Fahrassistenzfunktion mit der Parkbremsanlage wird in Schritt 209 die notwendige Kraftmodulation für die Ausführung der Fahrerassistenzfunktion über den Parkbremssteller umgesetzt. Hierfür wird der bereits angelegte und in der Position gehaltene Parkbremssteller eingesetzt. Auf diese Weise kann ein schnelles Ansprechen der notwendigen Kraftmodulation mittels der Parkbremsanlage ermöglicht werden.

Wenn in Schritt 206 ein Fehler erkannt worden ist, d.h. sollte die Betriebsbremsanlage nicht in Ordnung sein (N), kann auch in einem Schritt 212 alternativ ein Abbruch der Fahrassistenzfunktion sowie eine Benachrichtigung des Fahrers erfolgen

Während der Ausführung der Fahrassistenzfunktion findet in einem weiteren Schritt 210 eine Abfrage danach statt, ob die Fahrassistenzfunktion bereits abgeschlossen ist. Ein Abschluss der Fahrassistenzfunktion kann durch eine Deaktivierung durch den Fahrer, als auch bspw. durch eine vollständige Ausführung der Funktion erfolgen.

Wird ein Abschluss verneint (N), kann die Fahrassistenzfunktion weiterhin ausgeführt werden. Für den Fall, dass zuvor die Betriebsbremse fehlerhaft war, kann im Anschluss direkt weiter der Schritt 208 ausgeführt werden. Alternativ kann in diesem Fall auch erneut der Schritt 205 ausgeführt werden und im weiteren Verlauf erneut abgefragt werden, ob die Betriebsbremsanlage in Ordnung ist.

Sollte in Schritt 210 die Fahrassistenzfunktion als abgeschlossen bewertet werden (J) kann in einem darauf folgenden Schritt 211 ein regulärer Kraftaufbau mittels des bereits angelegten und in der Position gehaltenen Parkbremsstellers erfolgen. Der Schritt 211 ist dabei mit einer Aktivierung einer Feststellbremse des Fahrzeugs im eingeparkten Zustand zu vergleichen. Dies kann für einige autonome oder teilautonome Funktionen, bspw. "autonomes Parkmanöver" vorteilhaft, für andere autonome oder teilautonome Funktionen, bspw. "adaptive Geschwindigkeitsregelung" nicht notwendig oder nicht geeignet sein.

Im Anschluss endet das Verfahren.

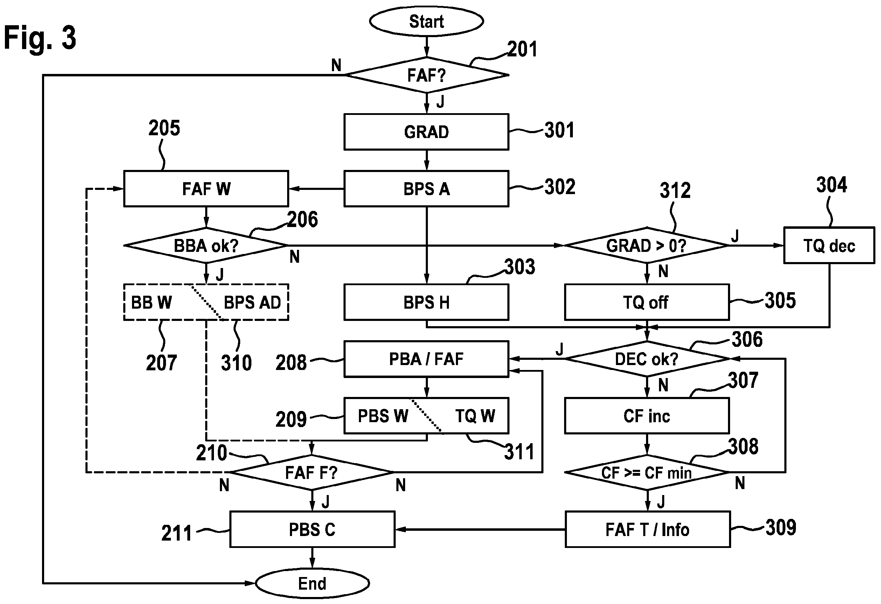

Die **Figur 3** zeigt ein Flussdiagramm zur Darstellung der wesentlichen Verfahrensschritte eines Verfahrens zum Absichern eines Fahrerassistenzsystems bei einem Fehler in der Betriebsbremsanlage bei gleichzeitiger hoher Verfügbarkeit des Systems durch Einstellung einer Haltekraft an einer Steigung am Beispiel eines autonomen Einparkmanövers. Grundsätzlich wird auf die vorstehenden Ausführungen zu der Ausführungsform in Figur 2 verwiesen und nachfolgend insbesondere auf die Unterschiede eingegangen. Der grundlegende Unterschied besteht darin, dass die Fahrassistenzfunktion in einem Gefälle ausgeführt wird.

Hierbei wird in einem Schritt 301 die Steigung ermittelt. Mittels des Algorithmus des Fahrassistenzsystems wird aus der Steigung eine erforderliche Klemmkraft ermittelt, welche es ermöglicht, eine ungewollte Bewegung des Autos zu vermeiden. Hierzu wird in einem Schritt 302 wenigstens ein Parkbremssteller aktiviert und mittels diesem, eine Haltekraft für das Fahrzeug erzeugt. Der Parkbremssteller wird in einem weiteren Schritt 303 in dieser Position gehalten. Anschließend, bzw. parallel dazu, wird in dem bereits beschriebenen Schritt 205 wird die Fahrassistenzfunktion ausgeführt. Da der Einparkvorgang in der Regel eher langsam ist, können die Schritte 205 und 302 nacheinander, gleichzeitig oder sogar in umgekehrter Reihenfolge gestartet werden. Insgesamt gilt, je früher ein Moment durch die Parkbremse bereitgestellt wird, desto geringer ist im Fehlerfall der zurückgelegte Weg.

Wird in einem Schritt 206 identifiziert, dass die Betriebsbremsanlage in Ordnung ist (J), wird in einem Schritt 207 die notwendige Kraftmodulation für die Ausführung der Fahrerassistenzfunktion über die Betriebsbremse umgesetzt. Es versteht sich, dass in einem Schritt 310 parallel und in Abstimmung hierzu eine entsprechende Anpassung der mittels der Parkbremse erzeugten und vorgehaltenen Klemmkraft der Bremse, bzw. Haltekraft des Kraftfahrzeugs an der Steigung erfolgt.

Wird in einem Schritt 206 identifiziert, dass ein Problem mit der Betriebsbremsanlage vorliegt (N), können in Abhängigkeit der in Schritt 301 ermittelten Steigung sowie der zu verfolgenden Fahrtrichtung des Fahrmanövers bezüglich des Gefälles unterschiedliche Reaktionen ausgeführt werden. Sollte bspw. die in Schritt 312 definierte Fahrtrichtung "Bergauf" (J) sein, wird in einem Schritt 304 das Motormoment teilweise reduziert, um keine zu große Antriebskraft darzustellen. Sollte bspw. die Fahrtrichtung "Bergab" (N) sein, wird hingegen das Motormoment komplett reduziert. Weiter kann auch ein Bremsmoment des Motors verwendet werden, um vorteilhaft eine Bewegung des Fahrzeugs abzubremsen.

In einem nächsten Schritt 306 wird ermittelt, ob die Fahrzeugverzögerung ausreichend ist. Zur Verzögerung des Fahrzeugs trägt auch der Parkbremssteller bei, welcher in der aufgrund der Steigung ermittelten Klemmposition gehalten worden ist. Ist die Verzögerung des Fahrzeugs nicht ausreichend (N) wird in einem Schritt 307 die Klemmkraft des Parkbremsstellers erhöht. Hierbei wird in einem Schritt 308 überprüft, ob die Klemmkraft bereits über einer Grenze der Mindestklemmkraft für den Parkbremssteller liegt. Ist dies noch nicht der Fall (N) wird erneut überprüft, ob die Fahrzeugverzögerung ausreicht, oder weiter erhöht werden muss. Sollte die Klemmkraft über der Grenze der Mindestklemmkraft liegen (J) wird die Fahrassistenzfunktion in dem Beispiel mit einem Schritt 309 abgebrochen und eine Information dazu generiert.

Ebenfalls kann der Nutzer in weiteren, bspw. in Figur 2 dargestellten Schritten, Informationen, bspw. akustisch, haptisch und/oder visuell über eine Fehlfunktion der Betriebsbremsanlage und eine Übernahme durch die Parkbremse auch bei einer Fortführung der Fahrassistenzfunktion erhalten, um bspw. über eine eingeschränkte Funktionsweise informiert zu werden.

Ist die ursprünglich erzielte oder durch die Erhöhung der Klemmkraft erreichte Fahrzeugverzögerung ausreichend (J), um eine ungewünschte Bewegung des Fahrzeugs zu vermeiden, wird die Fahrassistenzfunktion in einem Schritt 208 mit der Parkbremsanlage ausgeführt. Hierzu wird eine notwendige Kraft, bzw. geänderte Kraft mittels des Parkbremsstellers in Schritt 209 umgesetzt. Gleichzeitig wird in einem Schritt 311 das Motormoment entsprechend der Situation neu eingestellt.

Während der Ausführung der Fahrassistenzfunktion wird in einem Schritt 210, wie bereits beschrieben überprüft, ob die Fahrassistenzfunktion abgeschlossen ist. Ist dies nicht der Fall (N), wird in dem dargestellten Ausführungsbeispiel und bei einem bereits identifizierten Fehler der Betriebsbremsanlage mit dem Schritt 208, sowie bei keinem bisher identifizierten Fehler mit Schritt 205 weiter verfahren.

Sollte in Schritt 210 die Fahrassistenzfunktion als abgeschlossen bewertet werden (J) erfolgt in einem darauf folgenden Schritt 211 ein regulärer Kraftaufbau mittels des Parkbremsstellers. Dieser Schritt 211 ist dabei mit einer Aktivierung einer Feststellbremse des Fahrzeugs im eingeparkten Zustand zu vergleichen.

Damit endet das Verfahren.

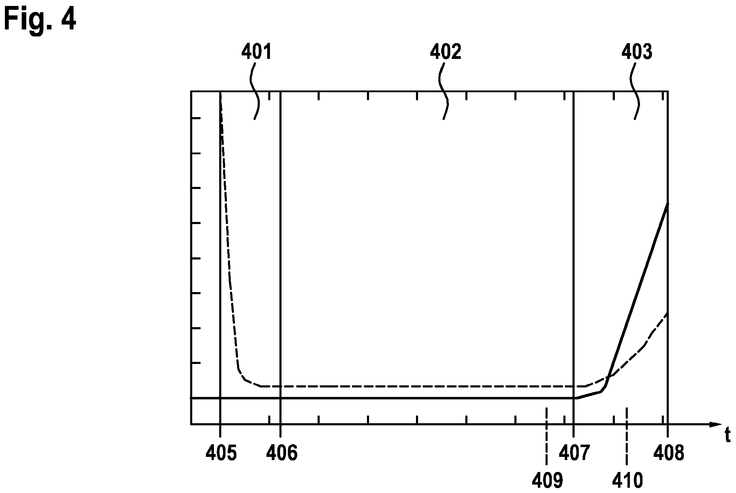

Die **Figur 4** zeigt einen beispielhaften Motorstromverlauf 411 und Klemmkraftverlauf 412 bei einer Parkbremse über die Zeit (t). Im Bereich 401 (auch "starting phase" genannt) wird der Motor erstmals bestromt und der Parkbremssteller wird aktiviert. Die beiden Zeitpunkte 405 und 406 markieren den Start- und Endzeitpunkt der Phase. Die X-Achse stellt eine Zeitschiene dar. Aus den Zeitpunkten der X-Achse sind allerdings bspw. auch Auslenkpositionen des Parkbremsstellers ableitbar. Der Zeitpunkt 405 entspricht beispielsweise der Ruheposition der Parkbremse. Die Zeitpunkte 409, bzw. 410 können beispielshaft einen vorbestimmten, Betriebszustand der Parkbremse darstellen. Hierbei wird deutlich, dass ausgehend von den vorbestimmten Betriebszuständen der Parkbremse ein erneutes Ansteuern in kurzer Zeit, bzw. unmittelbar zum Kraftanstieg und damit zu einem Bremsvorgang mit minimalem Zeitverzug führt.

Im Bereich 402 (auch "idle phase" genannt) werden der Leerweg und das Lüftspiel überwunden. Diese Phase wird durch die beiden Zeitpunkte 406 und 407 beschrieben. Dieser Vorgang dauert, wie auf der Zeitachse ersichtlich, relativ lang und kann sich bis zu 1 Sekunde erstrecken. Um bei Bedarf eine möglichst schneller Reaktion des Parkbremsstellers und ein schnelles Erzeugen einer Haltekraft zu ermöglichen, kann der Parkbremssteller bereits bei Start der Fahrassistenzfunktion in eine vorbestimmte Position gebracht werden, welche dem Zeitpunkt 409 entspricht, diese kann im hinteren Bereich der Phase 402 oder sogar im vorderen Bereich der Phase 403 liegen.

Im Bereich 403 (auch "force application phase" genannt) erfolgt ein Kraftaufbau, d.h. bspw. wird eine Klemmkraft zwischen dem Parkbremssteller und einer Bremsscheibe aufgebaut. Die beiden Zeitpunkte 407 sowie 408 markieren den Startpunkt sowie den Endpunkt der Phase. Bei einer Ausführung einer Fahrassistenzfunktion bei einer Steigung ist es wichtig, dass das Fahrzeug keine ungewünschte Bewegung durchführt. Daher muss es bereits zum Startzeitpunkt des autonomen Fahrmanövers entsprechend gebremst sein. Dafür wird der Parkbremssteller in eine geeignete weitere vorbestimmte Position gebracht, um die erforderliche Bremskraft aufzubringen. Diese Position entspricht dem Zeitpunkt 410, welcher in der Phase 403 liegt.

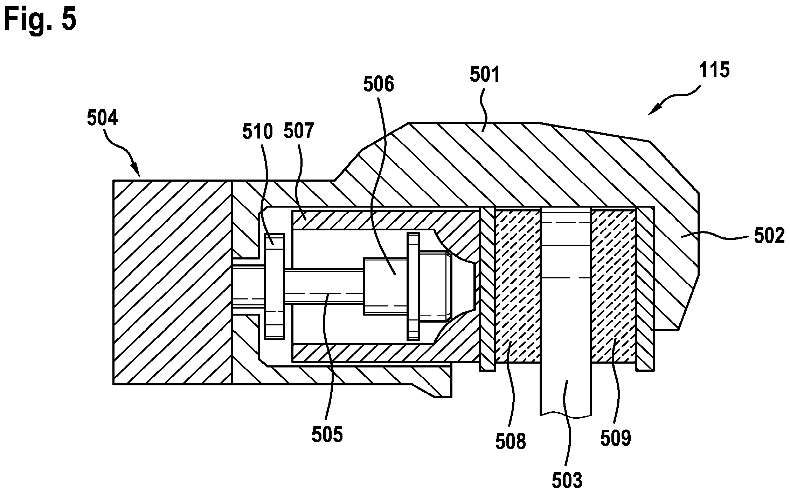

In **Figur 5** ist eine elektromechanische Parkbremse 115 zum Festsetzen eines Fahrzeugs im Stillstand dargestellt. Die Parkbremse 115 umfasst einen Bremssattel 501 mit einer Zange 502, welche eine Bremsscheibe 503 übergreift. Als Stellglied weist die Parkbremse 115 einen Elektromotor 504 als Bremsmotor auf, der eine Spindel 505 rotierend antreibt, auf der ein als Spindelmutter ausgeführtes Spindelbauteil 506, insbesondere rotationsfest, gelagert ist. Bei einer Rotation der Spindel 505 wird das Spindelbauteil 506 axial verstellt. Das Spindelbauteil 506 bewegt sich innerhalb eines Bremskolbens 507, der Träger eines Bremsbelags 508 ist, welcher von dem Bremskolben 507 gegen die Bremsscheibe 503 gedrückt wird. Auf der gegenüberliegenden Seite der Bremsscheibe 503 befindet sich ein weiterer Bremsbelag 509, der ortsfest an der Zange 502 gehalten ist.

Innerhalb des Bremskolbens 507 kann sich das Spindelbauteil 506 bei einer Drehbewegung der Spindel 505 axial nach vorne in Richtung auf die Bremsscheibe 503 zu bzw. bei einer entgegen gesetzten Drehbewegung der Spindel 505 axial nach hinten bis zum Erreichen eines Anschlags 510 bewegen. Zum Erzeugen einer Klemmkraft beaufschlagt das Spindelbauteil 506 die innere Stirnseite des Bremskolbens 507, wodurch der axial verschiebbar in der Parkbremse 115 gelagerte Bremskolben 507 mit dem Bremsbelag 508 gegen die zugewandte Stirnfläche der Bremsscheibe 503 gedrückt wird.

## Patentansprüche

1. Verfahren zum Betrieb eines Kraftfahrzeugs, wobei wenigstens ein autonomer oder teilautonomer Betrieb des Kraftfahrzeugs aktivierbar ist und das Kraftfahrzeug eine Betriebsbremse (113) und eine Parkbremse (115) aufweist, wobei in Reaktion auf einen erkannten definierten Betriebszustand des Kraftfahrzeugs mit einer Aktivierung des autonomen oder teilautonomen Betriebs die Parkbremse (115) aus einem Ruhezustand in einen vorbestimmen Betriebszustand gebracht wird, wobei der vorbestimmte Betriebszustand der Parkbremse (115) derart bestimmt ist, dass die Parkbremse (115) in dem vorbestimmten Betriebszustand eine gegenüber der Vollaktivierung deutlich geringere Bremswirkung erzeugt, wobei der vorbestimmte Betriebszustand der Parkbremse (115) einen Zustand der Parkbremse (115) darstellt, in welchem die Parkbremse (115) eine vorbestimmte Bremswirkung aufbringt, wobei vorgesehen ist, dass eine Position der Parkbremse (115) eingestellt ist, mittels der ein teil- oder voll beladenes Kraftfahrzeug an einer Steigung gehalten wird,
wobei ein weiterer Betriebszustand der Parkbremse (115) derart ausgebildet ist, dass
- bei einer Fehlfunktion der Betriebsbremse (113) und/oder von Komponenten einer Betriebsbremsanlage (112) und/oder
- bei einer Nichtverfügbarkeit der Betriebsbremse (113) und/oder von Komponenten einer Betriebsbremsanlage (112),
- die Parkbremse (115) während des autonomen oder teilautonomen Betriebs wenigstens teilweise eine Funktion der Betriebsbremse (113) übernimmt, um den aktivierten autonomen oder teilautonomen Betrieb wenigstens teilweise auszuführen.

2. Verfahren nach Anspruch 1, **dadurch gekennzeichnet, dass** im definierten Betriebszustand des Kraftfahrzeugs
- ein Stillstand des Kraftfahrzeugs und/oder
- eine Verzögerung des Kraftfahrzeugs und/oder
- eine Neigung des Kraftfahrzeugs und/oder
- wenigstens ein Ergebnis eines, insbesondere zyklischen, Tests von Komponenten und Betriebszuständen des Fahrzeugs die für den autonomen oder teilautonomen Betrieb erforderlich sind,
ermittelt und berücksichtigt werden.

3. Verfahren nach Anspruch 1, **dadurch gekennzeichnet, dass** eine Bestimmung des vorbestimmten Betriebszustand der Parkbremse (115) in Abhängigkeit erfolgt von einem vorliegenden Verschleiß wenigstens einer Betriebsbremse (113) und/oder Parkbremse (115).

4. Verfahren nach Anspruch 1, **dadurch gekennzeichnet, dass** die Parkbremse (115) aus dem Ruhezustand in den vorbestimmten Betriebszustand gebracht wird, wobei der vorbestimmte Betriebszustands der Parkbremse (115) eingestellt wird mittels
- einer Wegcharakteristik, wobei die Parkbremse (115) einen definierten Weg ausgehend von dem Ruhezustand in Richtung des vorbestimmten Betriebszustands der Parkbremse angesteuert wird und/oder
- einer Stromcharakteristik, wobei eine mittels einem Elektromotor (504) aktuierte Parkbremse (115) bis zu einer maximalen Stromstärke und/oder einem definierten Anstieg einer Stromstärke des Elektromotors (504) angesteuert wird und/oder
- einer Kraftcharakteristik, wobei die Parkbremse (115) bis zu einer definierten maximalen, insbesondere mittels eines Kraftschätzers ermittelten, Klemmkraft angesteuert wird.

5. Verfahren nach Anspruch 1, **dadurch gekennzeichnet, dass** der vorbestimmte Betriebszustand der Parkbremse (115) derart bestimmt wird, dass
- in einem ersten Schritt die Parkbremse (115) in Schließrichtung in eine erste Position gebracht und
- in einem zweiten Schritt die Parkbremse (115) in Öffnungsrichtung in eine zweite Position gebracht wird,
wobei insbesondere vorgesehen ist, dass
- in der ersten Position eine größere durch die Parkbremse (115) bewirkte Bremswirkung auftritt als in der zweiten Position.

6. Verfahren nach Anspruch 1, **dadurch gekennzeichnet, dass** der Betriebszustands der Parkbremse (115) dynamisch an eine Reaktion des Kraftfahrzeugs auf den vorbestimmten Betriebszustand der Parkbremse (115) angepasst wird.

7. Verfahren nach Anspruch 1, **dadurch gekennzeichnet, dass** bei der Fehlfunktion und/oder Nichtverfügbarkeit der Betriebsbremse (113) und/oder von Komponenten der Betriebsbremsanlage (112)
- ein Antriebsmoment eines Fahrzeugmotors in einem ersten Schritt reduziert und in einem weiteren Schritt neu eingeregelt wird und/oder
- ein Antriebsmoment eines Fahrzeugmotors in Abhängigkeit der Steigungsrichtung des Einparkmanövers angepasst wird, wobei insbesondere das Antriebsmoment bei positiver Steigung (bergauf) teilweise reduziert wird und/oder das Antriebsmoment bei negativer Steigung (bergab) ganz reduziert wird.

8. Verfahren nach Anspruch 1, **dadurch gekennzeichnet, dass** der autonome oder teilautonome Betrieb des Kraftfahrzeugs als "Einparkhilfe" und/oder "adaptive Geschwindigkeitsregelung" ausgestaltet ist.

9. Vorrichtung zum Betrieb eines Kraftfahrzeugs, wobei wenigstens ein autonomer oder teilautonomer Betrieb des Kraftfahrzeugs aktivierbar ist und das Kraftfahrzeug eine Betriebsbremse (113) und eine Parkbremse (115) aufweist, wobei Mittel vorgesehen sind, mittels der in Reaktion auf einen erkannten definierten Betriebszustand des Kraftfahrzeugs mit einer Aktivierung des autonomen oder teilautonomen Betriebs die Parkbremse (115) in einen vorbestimmen Betriebszustand gebracht wird, wobei der vorbestimmte Betriebszustand der Parkbremse (115) derart bestimmt ist, dass die Parkbremse (115) in dem vorbestimmten Betriebszustand eine gegenüber der Vollaktivierung deutlich geringere Bremswirkung erzeugt, wobei der vorbestimmte Betriebszustand der Parkbremse (115) einen Zustand der Parkbremse (115) darstellt, in welchem die Parkbremse (115) eine vorbestimmte Bremswirkung aufbringt, wobei vorgesehen ist, dass eine Position der Parkbremse (115) eingestellt ist, mittels der ein teil- und/oder vollbeladenes Kraftfahrzeug an einer Steigung gehalten wird, wobei ein weiterer Betriebszustand der Parkbremse (115) derart ausgebildet ist, dass
- bei einer Fehlfunktion der Betriebsbremse (113) und/oder von Komponenten einer Betriebsbremsanlage (112) und/oder
- bei einer Nichtverfügbarkeit der Betriebsbremse (113) und/oder von Komponenten einer Betriebsbremsanlage (112),
- die Parkbremse (115) während des autonomen oder teilautonomen Betriebs wenigstens teilweise eine Funktion der Betriebsbremse (113) übernimmt, um den aktivierten autonomen oder teilautonomen Betrieb wenigstens teilweise auszuführen.

10. Vorrichtung nach Anspruch 9, **dadurch gekennzeichnet, dass** Mittel vorgesehen sind, mittels welcher der Betriebszustands der Parkbremse (115) dynamisch an eine Reaktion des Kraftfahrzeugs auf den vorbestimmten Betriebszustand der Parkbremse (115) angepasst wird.

11. Vorrichtung nach Anspruch 9, **dadurch gekennzeichnet, dass** Mittel vorgesehen sind, mittels welcher der vorbestimmte Betriebszustand der Parkbremse (115) derart bestimmt wird, dass
- in einem ersten Schritt die Parkbremse (115) in Schließrichtung in eine erste Position gebracht und
- in einem zweiten Schritt die Parkbremse (115) in Öffnungsrichtung in eine zweite Position gebracht wird,
wobei insbesondere vorgesehen ist, dass
- in der ersten Position eine größere durch die Parkbremse (115) bewirkte Bremswirkung auftritt als in der zweiten Position.

12. Vorrichtung nach Anspruch 11, **dadurch gekennzeichnet, dass** Mittel vorgesehen sind, mittels welcher die erste und zweite Position durch Auswertung einer Klemmkraft, welche durch eine mittels einem Elektromotor (504) aktuierte Parkbremse (115) bewirkt ist, bestimmt werden, wobei insbesondere vorgesehen ist, dass die Klemmkraft auf Basis einer Stromstärke des Elektromotors (504) bestimmt wird.

## Claims

1. Method for operating a motor vehicle, wherein at least one autonomous or partially autonomous mode of the motor vehicle is able to be activated and the motor vehicle comprises a service brake (113) and a parking brake (115), the parking brake (115) being taken from a rest state into a predetermined operating state in response to a detected defined operating state of the motor vehicle with activation of the autonomous or partially autonomous mode, the predetermined operating state of the parking brake (115) having been determined such that in the predetermined operating state the parking brake (115) produces a significantly lesser braking effect compared with full activation, the predetermined operating state of the parking brake (115) being a state of the parking brake (115) in which the parking brake (115) applies a predetermined braking effect, there being provision for a position of the parking brake (115) to have been set by means of which a partially or fully laden motor vehicle is held on an incline,
wherein a further operating state of the parking brake (115) is designed such that
- in the event of a malfunction of the service brake (113) and/or of components of a service brake system (112) and/or
- in the event of unavailability of the service brake (113) and/or of components of a service brake system (112),
- the parking brake (115) at least partly takes over a function of the service brake (113) during the autonomous or partially autonomous mode in order to at least partly carry out the activated autonomous or partially autonomous mode.

2. Method according to Claim 1, **characterized in that**
- a standstill of the motor vehicle and/or
- a deceleration of the motor vehicle and/or
- an inclination of the motor vehicle and/or
- at least one result of a test, in particular a cyclical test, on components and operating states of the vehicle that are necessary for the autonomous or partially autonomous mode
are determined and taken into consideration in the defined operating state of the motor vehicle.

3. Method according to Claim 1, **characterized in that** the predetermined operating state of the parking brake (115) is determined on the basis of wear that is present on at least one service brake (113) and/or parking brake (115).

4. Method according to Claim 1, **characterized in that** the parking brake (115) is taken from the rest state into the predetermined operating state, the predetermined operating state of the parking brake (115) being set by means of
- a travel characteristic, wherein the parking brake (115) is controlled over a defined travel starting from the rest state in the direction of the predetermined operating state of the parking brake and/or
- a current characteristic, wherein a parking brake (115) that is actuated by means of an electric motor (504) is controlled up to a maximum current and/or a defined increase in a current of the electric motor (504) and/or
- a force characteristic, wherein the parking brake (115) is controlled up to a defined maximum clamping force, which is determined in particular by means of a force estimator.

5. Method according to Claim 1, **characterized in that** the predetermined operating state of the parking brake (115) is determined such that
- in a first step the parking brake (115) is taken in the application direction to a first position and
- in a second step the parking brake (115) is taken in the release direction to a second position,
there being in particular provision for
- a greater braking effect caused by the parking brake (115) to occur in the first position than in the second position.

6. Method according to Claim 1, **characterized in that** the operating state of the parking brake (115) is dynamically matched to a response of the motor vehicle to the predetermined operating state of the parking brake (115).

7. Method according to Claim 1, **characterized in that** the malfunction and/or unavailability of the service brake (113) and/or of components of the service brake system (112) results in
- a drive torque of a vehicle engine being reduced in a first step and readjusted in a further step and/or
- a drive torque of a vehicle engine being adapted on the basis of the direction of incline of the parking manoeuvre, wherein in particular the drive torque is partly reduced in the case of a positive incline (uphill) and/or the drive torque is completely reduced in the case of a negative incline (downhill).

8. Method according to Claim 1, **characterized in that** the autonomous or partially autonomous mode of the motor vehicle is configured as a "parking aid" and/or as an "adaptive cruise control".

9. Apparatus for operating a motor vehicle, wherein at least one autonomous or partially autonomous mode of the motor vehicle is able to be activated and the motor vehicle comprises a service brake (113) and a parking brake (115), there being provision for means by means of which the parking brake (115) is taken into a predetermined operating state in response to a detected defined operating state of the motor vehicle with activation of the autonomous or partially autonomous mode, the predetermined operating state of the parking brake (115) having been determined such that in the predetermined operating state the parking brake (115) produces a significantly lesser braking effect compared with full activation, the predetermined operating state of the parking brake (115) being a state of the parking brake (115) in which the parking brake (115) applies a predetermined braking effect, there being provision for a position of the parking brake (115) to have been set by means of which a partially and/or fully laden motor vehicle is held on an incline, wherein a further operating state of the parking brake (115) is designed such that
- in the event of a malfunction of the service brake (113) and/or of components of a service brake system (112) and/or
- in the event of unavailability of the service brake (113) and/or of components of a service brake system (112),
- the parking brake (115) at least partly takes over a function of the service brake (113) during the autonomous or partially autonomous mode in order to at least partly carry out the activated autonomous or partially autonomous mode.

10. Apparatus according to Claim 9, **characterized in that** there is provision for means by means of which the operating state of the parking brake (115) is dynamically matched to a response of the motor vehicle to the predetermined operating state of the parking brake (115).

11. Apparatus according to Claim 9, **characterized in that** there is provision for means by means of which the predetermined operating state of the parking brake (115) is determined such that
- in a first step the parking brake (115) is taken in the application direction to a first position and
- in a second step the parking brake (115) is taken in the release direction to a second position,
there being in particular provision for
- a greater braking effect caused by the parking brake (115) to occur in the first position than in the second position.

12. Apparatus according to Claim 11, **characterized in that** there is provision for means by means of which the first and second positions are determined by evaluating a clamping force caused by a parking brake (115) that is actuated by means of an electric motor (504), there being in particular provision for the clamping force to be determined on the basis of a current of the electric motor (504).

## Revendications

1. Procédé de fonctionnement d'un véhicule automobile, au moins un fonctionnement autonome ou semi-autonome du véhicule automobile pouvant être activé et le véhicule automobile comportant un frein de service (113) et un frein de stationnement (115), le frein de stationnement (115) étant amené d'un état de repos à un état de fonctionnement prédéterminé en réponse à un état de fonctionnement défini reconnu du véhicule automobile avec une activation du fonctionnement autonome ou semi-autonome, l'état de fonctionnement prédéterminé du frein de stationnement (115) étant déterminé de manière à ce que le frein de stationnement (115) dans l'état de fonctionnement prédéterminé produise un effet de freinage nettement inférieur par rapport à une activation complète, l'état de fonctionnement prédéterminé du frein de stationnement (115) représentant un état du frein de stationnement (115) dans lequel le frein de stationnement (115) applique un effet de freinage prédéterminé, une position du frein de stationnement (115) étant prévue pour être réglée afin de permettre le maintien d'un véhicule automobile partiellement ou entièrement chargé sur une pente,
un autre état de fonctionnement du frein de stationnement (115) étant conçu de manière à ce que
- en cas de dysfonctionnement du frein de service (113) et/ou de composants d'un système de frein de service (112) et/ou
- en cas d'indisponibilité du frein de service (113) et/ou de composants d'un système de frein de service (112),
- le frein de stationnement (115) assure au moins partiellement une fonction du frein de service (113) lors d'un fonctionnement autonome ou semi-autonome afin d'exécuter au moins partiellement le fonctionnement autonome ou semi-autonome activé.

2. Procédé selon la revendication 1, **caractérisé en ce que** dans l'état de fonctionnement défini du véhicule automobile
- un arrêt du véhicule automobile et/ou
- un retard du véhicule automobile et/ou
- une inclinaison du véhicule automobile et/ou
- au moins un résultat d'un test, notamment cyclique, de composants et d'états de fonctionnement du véhicule qui sont nécessaires au fonctionnement autonome ou semi-autonome
Sont déterminés et pris en compte.

3. Procédé selon la revendication 1, **caractérisé en ce que** l'état de fonctionnement prédéterminé du frein de stationnement (115) est déterminé en fonction d'une usure présente d'au moins un frein de service (113) et/ou frein de stationnement (115).

4. Procédé selon la revendication 1, **caractérisé en ce que** le frein de stationnement (115) est amené de l'état de repos à l'état de fonctionnement prédéterminé, l'état de fonctionnement prédéterminé du frein de stationnement (115) étant réglé au moyen
- d'une caractéristique de chemin, le frein de stationnement (115) étant commandé sur une trajectoire définie depuis l'état de repos en direction de l'état de fonctionnement prédéterminé du frein de stationnement et/ou
- d'une caractéristique de courant, un frein de stationnement (115) actionné au moyen d'un moteur électrique (504) étant commandé jusqu'à une intensité de courant maximale et/ou une augmentation définie d'une intensité de courant du moteur électrique (504) et/ou
- d'une caractéristique de force, le frein de stationnement (115) étant commandé jusqu'à une force de serrage maximale définie, en particulier déterminée au moyen d'un estimateur de force.

5. Procédé selon la revendication 1, **caractérisé en ce que** l'état de fonctionnement prédéterminé du frein de stationnement (115) est déterminé de manière à ce que
- dans une première étape, le frein de stationnement (115) soit amené dans une première position dans le sens de fermeture et
- dans une deuxième étape, le frein de stationnement (115) soit amené dans une deuxième position dans le sens d'ouverture,
un effet de freinage provoqué par le frein de stationnement (115) étant notamment prévu de se produire de manière à
- être plus important dans la première position que dans la deuxième position.

6. Procédé selon la revendication 1, **caractérisé en ce que** l'état de fonctionnement du frein de stationnement (115) est adapté dynamiquement à une réaction du véhicule automobile à l'état de fonctionnement prédéterminé du frein de stationnement (115).

7. Procédé selon la revendication 1, **caractérisé en ce que**, en cas de dysfonctionnement et/ou d'indisponibilité du frein de service (113) et/ou de composants du système de frein de service (112),
- un couple d'entraînement d'un moteur de véhicule est réduit dans une première étape et réajusté dans une étape ultérieure et/ou
- un couple d'entraînement d'un moteur de véhicule est ajusté en fonction du sens d'inclinaison de la manoeuvre de stationnement, en particulier le couple d'entraînement étant réduit partiellement dans une pente positive (montée) et/ou le couple d'entraînement étant complètement réduit dans une pente négative (descente).

8. Procédé selon la revendication 1, **caractérisé en ce que** le fonctionnement autonome ou semi-autonome du véhicule automobile est conçu comme une « aide au stationnement » et/ou une « régulation de vitesse adaptative ».

9. Dispositif de fonctionnement d'un véhicule automobile, au moins un fonctionnement autonome ou semi-autonome du véhicule automobile pouvant être activé et le véhicule automobile comportant un frein de service (113) et un frein de stationnement (115), des moyens étant prévus qui permettent d'amener le frein de stationnement (115) dans un état de fonctionnement prédéterminé en réponse à un état de fonctionnement défini reconnu du véhicule automobile avec activation du fonctionnement autonome ou semi-autonome, l'état de fonctionnement prédéterminé du frein de stationnement (115) étant déterminé de manière à ce que le frein de stationnement (115) dans l'état de fonctionnement prédéterminé produise un effet de freinage nettement inférieur par rapport à l'activation complète, l'état de fonctionnement prédéterminé du frein de stationnement (115) représentant un état du frein de stationnement (115) dans lequel le frein de stationnement (115) applique un effet de freinage prédéterminé, une position du frein de stationnement (115) étant prévue pour être réglée afin de permettre le maintien d'un véhicule automobile partiellement et/ou entièrement chargé sur une pente, un autre état de fonctionnement du frein de stationnement (115) étant conçu de manière à ce que
- en cas de dysfonctionnement du frein de service (113) et/ou de composants d'un système de frein de service (112) et/ou
- en cas d'indisponibilité du frein de service (113) et/ou de composants d'un système de frein de service (112),
- le frein de stationnement (115) assure au moins partiellement une fonction du frein de service (113) lors d'un fonctionnement autonome ou semi-autonome afin d'exécuter au moins partiellement le fonctionnement autonome ou semi-autonome activé.

10. Dispositif selon la revendication 9, **caractérisé en ce que** des moyens sont prévus qui permettent d'adapter l'état de fonctionnement du frein de stationnement (115) de manière dynamique à une réaction du véhicule automobile à l'état de fonctionnement prédéterminé du frein de stationnement (115).

11. Dispositif selon la revendication 9, **caractérisé en ce que** des moyens sont prévus qui permettent de déterminer l'état de fonctionnement prédéterminé du frein de stationnement (115) de manière à ce que
- dans une première étape, le frein de stationnement (115) soit amené dans une première position dans le sens de fermeture et
- dans une deuxième étape, le frein de stationnement (115) soit amené dans une deuxième position dans le sens d'ouverture,
un effet de freinage provoqué par le frein de stationnement (115) étant notamment prévu de se produire de manière à
- être plus important dans la première position que dans la deuxième position.

12. Dispositif selon la revendication 11, **caractérisé en ce que** des moyens sont prévus pour déterminer les première et deuxième positions en évaluant une force de serrage qui est provoquée par un frein de stationnement (115) actionné au moyen d'un moteur électrique (504), la force de serrage étant notamment prévue pour être déterminée sur la base d'une intensité de courant du moteur électrique (504).
